# EUROPEAN PATENT APPLICATION

(11) **EP 4 307 090 A1**
(43) Date of publication of application: **17.01.2024**
(21) Application number: 23181006.0
(22) Date of filing: 22.06.2023
(51) Int. Cl.: G06F 3/01, G06F 3/0482, G06F 3/03, G06F 3/0346

(54) **AN INFORMATION PROCESSING APPARATUS, METHOD, COMPUTER PROGRAM AND SYSTEM**

(30) Priority: 15.07.2022 GB 202210408
(71) Applicant: Sony Interactive Entertainment Inc., Tokyo 108-0075 (JP)
(72) Inventor: GUPTA, Rajeev, London, W1F 7LP (GB); BREUGELMANS, Mark, London, W1F 7LP (GB)
(74) Representative: D Young & Co LLP

(57) **Abstract**

An information processing apparatus comprises processing circuitry configured to perform control to display a user interface in response to detection of a first trigger condition, the user interface comprising a plurality of items, arranged in a ring, that can be highlighted for selection by a user, receive an input signal from a user input device, analyze the input signal to determine a degree of rotation of a portion of an arm of a user, and perform control to update the user interface in accordance with the determined degree of rotation of the portion of the arm of the user to highlight one of the plurality of items for selection.

## Description

### BACKGROUND

### Field of the Disclosure

The present invention relates to an information processing apparatus, method, computer program and system.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

In recent years, the use of information processing apparatuses has become more widespread. In particular, a significant number of tasks now require the use of an information processing apparatus. This can include tasks in the workplace, for example. An information processing apparatus is now also often used also in a home environment. For example, a person may use an information processing apparatus for entertainment purposes such as playing video games or otherwise interacting with digital content (including editing a video, viewing information on the internet or the like).

The use of an information processing apparatus requires a person to provide an input in order to cause the information processing apparatus to perform a certain task. For example, a person who is playing a video game using an information processing apparatus (such as an entertainment system) may need to provide a certain input in order to control an action within the video game. Sometimes a number of quite complex input operations may need to be performed by a user in order to control the information processing apparatus.

Complex input operations can make an information processing apparatus quite difficult to use. Indeed, some users may have difficulty in performing the necessary input operations in order to control an information processing apparatus. In particular, some users may have a limited range of finger movement (owing to a medical condition such as arthritis or the like) which makes it more difficult to perform necessary input operations. The problem may also be exacerbated for a more elderly user who may find it very difficult to perform the necessary input operations to control an information processing apparatus.

It is an aim of the present disclosure to address or mitigate this problem.

### SUMMARY:

A brief summary about the present disclosure is provided hereinafter to provide basic understanding related to certain aspects of the present disclosure.

In accordance with a first aspect of the disclosure, an information processing apparatus is provided, in accordance with claim 1.

In accordance with a second aspect of the disclosure, an information processing method is provided, in accordance with claim 22.

In accordance with a third aspect of the disclosure, a computer program is provided, in accordance with claim 23.

In accordance with a fourth aspect of the disclosure, an information processing system is provided, in accordance with claim 25.

According to embodiments of the disclosure a user can more easily and accurately perform input operations to control an information processing device. In particular, embodiments of the disclosure reduce the precision and complexity of input operations which must be performed. Therefore, it is easier for the user to control the information processing apparatus (including accessing menus and options on an information processing apparatus, for example).

Of course, it will be appreciated that the present disclosure is not particularly limited to these advantageous technical effects. Other advantageous technical effects will become apparent to the skilled person when reading the disclosure.

### BRIEF DESCRIPTION OF THE DRAWINGS:

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus in accordance with embodiments of the disclosure;
Figure 2 illustrates an example of an entertainment system in accordance with embodiments of the disclosure;
Figure 3 illustrates an example handheld controller in accordance with embodiments of the disclosure;
Figure 4 illustrates the architecture of an example HMD device in accordance with embodiments of the disclosure;
Figure 5 illustrates an example the configuration of apparatus in accordance with embodiments of the disclosure;
Figure 6 illustrates an example user interface in accordance with embodiments of the disclosure;
Figure 7 illustrates an example of a control operation in accordance with embodiments of the disclosure;
Figure 8 illustrates an example of a control operation in accordance with embodiments of the disclosure; and
Figure 9 illustrates a method in accordance with embodiments of the disclosure.

### DESCRIPTION OF THE EMBODIMENTS:

The foregoing paragraphs have been provided by way of general introduction, and are not intended to limit the scope of the following claims. The described embodiments, together with further advantages, will be best understood by reference to the following detailed description taken in conjunction with the accompanying drawings (wherein like reference numerals designate identical or corresponding parts throughout the several views).

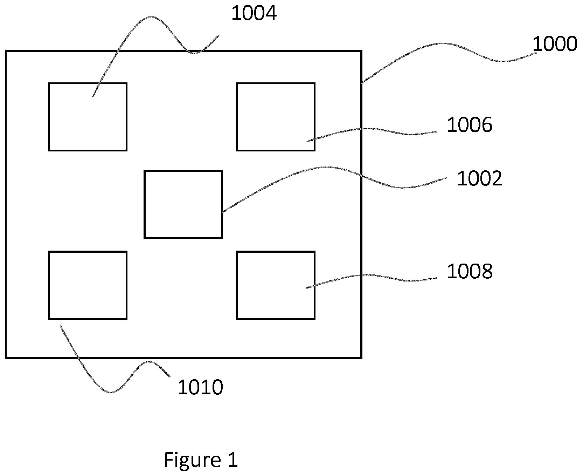

Referring to Figure 1, an apparatus 1000 (an example of an information processing apparatus) according to embodiments of the disclosure is shown. Typically, an apparatus 1000 according to embodiments of the disclosure is a computer device such as a personal computer, a an entertainment system or videogame console such as the Sony^{®} PlayStation 5^{®}, or a terminal connected to a server. Indeed, in embodiments, the apparatus may also be a server. The apparatus 1000 is controlled using a microprocessor or other processing circuitry 1002. In some examples, the apparatus 1000 may be a portable computing device such as a mobile phone, laptop computer or tablet computing device.

The processing circuitry 1002 may be a microprocessor carrying out computer instructions or may be an Application Specific Integrated Circuit. The computer instructions are stored on storage medium 1004 which maybe a magnetically readable medium, optically readable medium or solid state type circuitry. The storage medium 1004 may be integrated into the apparatus 1000 or may be separate to the apparatus 1000 and connected thereto using either a wired or wireless connection. The computer instructions may be embodied as computer software that contains computer readable code which, when loaded onto the processor circuitry 1002, configures the processor circuitry 1002 to perform a method according to embodiments of the disclosure.

Additionally, an optional user input device 1006 is shown connected to the processing circuitry 1002. The user input device 1006 may be a touch screen or may be a mouse or stylist type input device. The user input device 1006 may also be a keyboard, controller, or any combination of these devices.

A network connection 1008 may optionally be coupled to the processor circuitry 1002. The network connection 1008 may be a connection to a Local Area Network or a Wide Area Network such as the Internet or a Virtual Private Network or the like. The network connection 1008 may be connected to a server allowing the processor circuitry 1002 to communicate with another apparatus in order to obtain or provide relevant data. The network connection 1002 may be behind a firewall or some other form of network security.

Additionally, shown coupled to the processing circuitry 1002, is a display device 1010. The display device 1010, although shown integrated into the apparatus 1000, may additionally be separate to the apparatus 1000 and may be a monitor or some kind of device allowing the user to visualize the operation of the system (e.g. a display screen or a head mounted display). In addition, the display device 1010 may be a printer, projector or some other device allowing relevant information generated by the apparatus 1000 to be viewed by the user or by a third party.

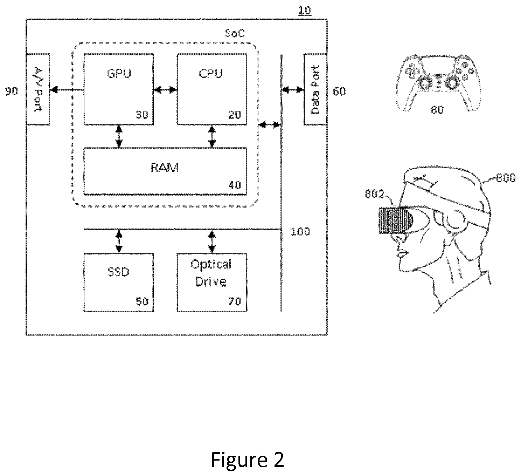

Referring now to Figure 2, an example of an entertainment system in accordance with embodiments of the disclosure is illustrated. An example of an entertainment system 10 is a computer or console such as the Sony ^{®} PlayStation 5 ^{®} (PS5). The entertainment system 10 is an example of an information processing apparatus 1000 in accordance with embodiments of the disclosure.

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

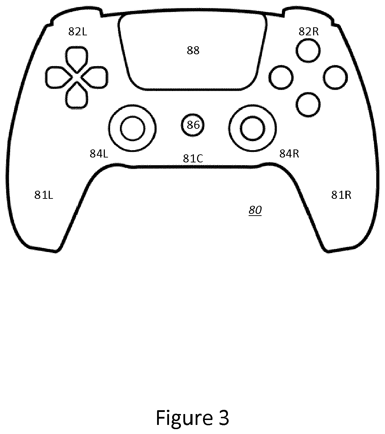

Turning now to Figure 3 of the present disclosure, an example of a handheld controller in accordance with embodiments of the disclosure is illustrated. Indeed, in Figure 3, a DualSense ^{®} controller 80 is illustrated as an example of a handheld controller. Such a controller typically has two handle sections 81L,R and a central body 81C. Various controls are distributed over the controller, typically in local groups. Examples include a left button group 82L, which may comprise directional controls and/or one or more shoulder buttons, and similarly right button group 82R, which comprise function controls and/or one or more shoulder buttons. The controller also includes left and/or right joysticks 84L,R, which may optionally also be operable as buttons by pressing down on them.

The controller (typically in the central portion of the device) may also comprise one or more system buttons 86, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 88, a light for optical tracking (not shown), a screen (not shown), haptic feedback elements (not shown), and the like.

It will be appreciated that a head mounted display 'HMD', worn by a user, can display images output by the entertainment system.

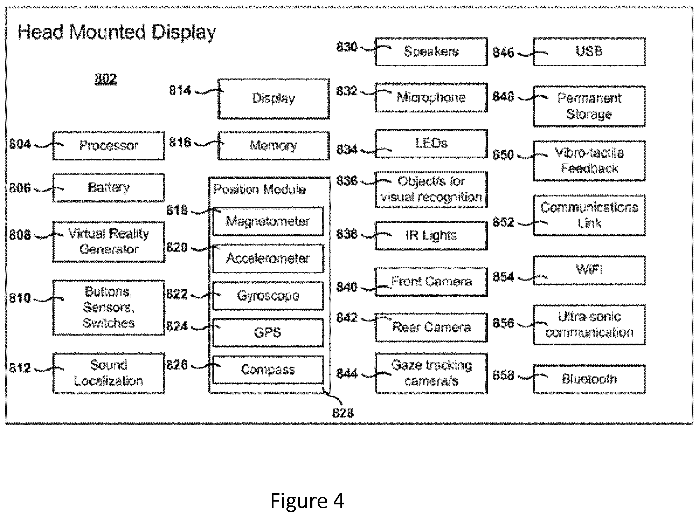

Referring now to Figure 4, this illustrates the architecture of an example HMD device. The HMD may also be a computing device and may include modules usually found on a computing device, such as one or more of a processor 804, memory 816 (RAM, ROM, etc.), one or more batteries 806 or other power sources, and permanent storage 848 (such as a solid state disk).

One or more communication modules can allow the HMD to exchange information with other portable devices, other computers (e.g. the PS5^{®}), other HMDs, servers, etc. Communication modules can include a Universal Serial Bus (USB) connector 846, a communications link 852 (such as Ethernet ^{®}), ultrasonic or infrared communication 856, Bluetooth ^{®} 858, and WiFi ^{®} 854.

A user interface can include one or more modules for input and output. The input modules can include input buttons (e.g. a power button), sensors and switches 810, a microphone 832, a touch sensitive screen (not shown, that may be used to configure or initialize the HMD), one or more front cameras 840, one or more rear cameras 842, one or more gaze tracking cameras 844. Other input/output devices, such as a keyboard or a mouse, can also be connected to the portable device via communications link, such as USB or Bluetooth ^{®}.

The output modules can include the display 814 for rendering images in front of the user's eyes. Some embodiments may include one display, two displays (one for each eye), micro projectors, or other display technologies. Other output modules can include Light-Emitting Diodes (LED) 834 (which may also be used for visual tracking of the HMD), vibro-tactile feedback 850, speakers 830, and a sound localization module 812, which performs sound localization for sounds to be delivered to speakers or headphones. Other output devices, such as headphones, can also connect to the HMD via the communication modules, be permanently attached to the HMD, or integral to it.

One or more elements that may be included to facilitate motion tracking include LEDs 834, one or more objects for visual recognition 836, and infrared lights 838. Alternatively or in addition, the one or more front or rear cameras may facilitate motion tracking based on image motion.

Information from one or more different modules can be used by the position module 828 to calculate the position of the HMD. These modules can include a magnetometer 818, an accelerometer 820, a gyroscope 822, a Global Positioning System (GPS) module 824, and a compass 826. Alternatively or in addition, the position module can analyze image data captured with one or more of the cameras to calculate the position. Further yet, optionally the position module can perform tests to determine the position of the portable device or the position of other devices in the vicinity, such as a WiFi ping test or ultrasound tests.

A virtual reality generator 808 then outputs one or more images corresponding to a virtual or augmented reality environment or elements thereof, using the position calculated by the position module. The virtual reality generator 808 may cooperate with other computing devices (e.g., PS5^{®} or other game console, Internet server, etc.) to generate images for the display module 814. The remote devices may send screen updates or instructions for creating game objects on the screen.

Hence the virtual reality generator 808 may be responsible for none, some, or all of the generation of one or more images then presented to the user, and / or may be responsible for any shifting of some or all of one or both images in response to inter-frame motion of the user (e.g. so-called reprojection).

It should be appreciated that the embodiment illustrated in Figure 4 is an exemplary implementation of an HMD, and other embodiments may utilize different modules, a subset of the modules, or assign related tasks to different modules. The embodiment illustrated in Figure 4 should therefore not be interpreted to be exclusive or limiting, but rather exemplary or illustrative. It will also be appreciated that the functionality of at least a subset of the modules may be provided by, or in concert with, corresponding modules of the entertainment device (in turn typically provided by a processor of that device operating under suitable software instruction).

Now, it will be appreciated that it can be difficult for a user to perform an input operation to control an information processing apparatus - especially when that input operation requires very precise movements or control. This problem can be exacerbated for users with mobility difficulties, such as a user who is suffering from a condition such as arthritis which limits a movement (such as a finger movement or the like) which can be made.

In view of these problems (and also those as mentioned in the Background), an information processing apparatus, method, computer program and system are provided in accordance with embodiments of the disclosure.

### <Apparatus>

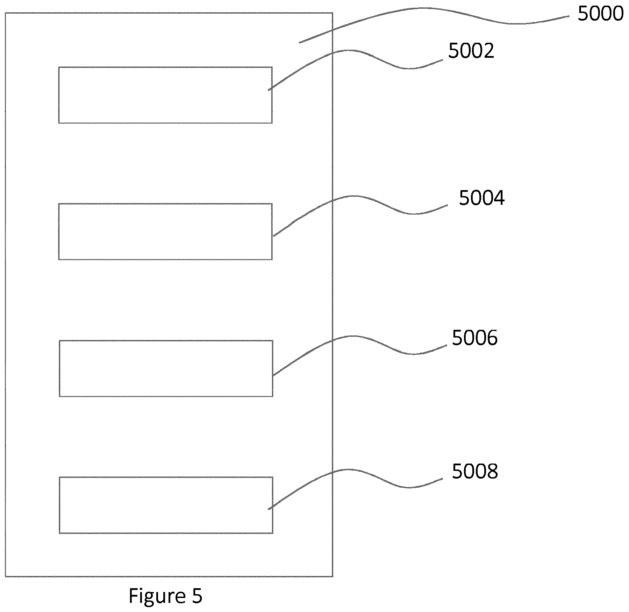

Turning to Figure 5 of the present disclosure, the configuration of an apparatus according to embodiments of the disclosure is illustrated.

The apparatus 5000 illustrated in Figure 5 may be an example of an information processing apparatus in accordance with embodiments of the disclosure. This apparatus 5000 comprises a first control unit 5002, a receiving unit 5004, an analysis unit 5006 and a second control unit 5008.

The first control unit 5002 of apparatus 5000 is configured to perform control to display a user interface in response to detection of a first trigger condition, the user interface comprising a plurality of items, arranged in a ring, that can be highlighted for selection by a user.

The receiving unit 5004 is configured to receive an input signal from a user input device.

The analysis unit 5006 is configured to analyze the input signal to determine a degree of rotation of a portion of the arm of a user.

Finally, the second control unit 5008 is configured to perform control to update the user interface in accordance with the determined degree of rotation of the portion of the arm of the user to highlight one of the plurality of items for selection.

In this way, a user can more easily and accurately perform input operations to control an information processing apparatus. In particular, embodiments of the disclosure reduce the precision and complexity of input operations which must be performed when controlling an information processing apparatus. Therefore, it is easier for the user to control the information processing apparatus (including accessing menus and options on an information processing apparatus, for example).

Of course, while described as separate units of apparatus 5000, it will be appreciated that the first control unit 5002, receiving unit 5004, analysis unit 5006 and second control unit 5008 may, more generally, be implemented as circuitry of apparatus 5000 (e.g. processing circuitry 1002 of apparatus 1000 as described with reference to Figure 1, for example).

Furthermore, in some examples, apparatus 5000 may be part of an entertainment system such as entertainment system 10 described with reference to Figure 2 of the present disclosure. In particular, one or more of the A/V port 90, GPU 30, CPU 20, RAM 40, SSD 50, Optical Drive 70 and/or Data port 60 of the entertainment system 10 may be configured to function as the apparatus 5000 of the present disclosure. However, the present disclosure is not particularly limited in this regard.

In addition, in some examples of the disclosure, a system may be provided, where the apparatus 5000 is provided as part of the system (optionally as part of the entertainment system 10 as described with reference to Figure 2 of the present disclosure) and one or more other devices are also provided as part of this system. An example of the one or more other devices which can also be provided as part of this system include a display device (such as a screen or a HMD), a control device (such as controller 80 described with reference to Figure 3 of the present disclosure) and/or an image capture device (used, for example, to capture an image of a user in order to determine a degree of rotation of the arm of the user). However, while a system can be provided in this manner, the present disclosure is not particularly limited in this regard.

Further details of the respective units of the apparatus 5000 will now be described with reference to an example situation where a user performs an operation to control an entertainment system (such as the example entertainment system 10 as described with reference to Figure 2 of the present disclosure). However, while certain features are described in this context, it will be appreciated that such an example is not to be interpreted to be exclusive or limiting, but rather exemplary or illustrative.

### <First Control Unit 5002>

As explained with reference to Figure 5 of the present disclosure, apparatus 5000 comprises a first control unit 5002 configured to perform control to display a user interface in response to detection of a first trigger condition, the user interface comprising a plurality of items, arranged in a ring, that can be highlighted for selection by a user.

Consider an example where a user 800 is playing a video game on an entertainment system such as the entertainment system 10 as described with reference to Figure 2 of the present disclosure. The video game being played by the user 800 may, generally, be any type of video game. However, in this specific example, the video game is an adventure game, where the user is able to control actions of a hero character within a virtual environment.

It will be appreciated that the video game may be displayed to the user on a screen. Alternatively, the video game may be displayed to the user on a HMD (such as HMD 802 as described with reference to Figure 2 of the present disclosure). As such, the user is able to see the content of the video game displayed by the entertainment system 10.

While playing the video game, the user may be required to perform certain actions in order to control a function or operation of the game. For example, the user 800 may wish to select certain items which have been collected within the game environment and equip their hero character with those items. Therefore, the user must first open a control menu such as an item inventory (which may show all the items which have been collected by the user during the game).

In some examples, items for selection by the user may be displayed as icons. However, in other examples, the items for selection may be displayed in a different way. For example, a short video sequence may be used to represent the items for selection. Alternatively, the items for selection may be represented by a textual description. Alternatively, the items for selection may be buttons or other interactive elements. The items may also comprise a mixture of different types of items. The present disclosure is not particularly limited in this respect.

As explained in the Background, it can be difficult for the user 800 to perform an input operation to control an information processing apparatus when that input operation requires very precise movements or control. However, embodiments of the disclosure enable the user 800 to more easily perform input operations to control an information processing apparatus. This makes it easier to access menus and options on an information processing apparatus, for example.

When the user 800 wishes to perform a selection to equip the hero character with an item, they must first open a control menu such as an item inventory. The item inventory in this example is an example of a user interface in accordance with embodiments of the disclosure.

The first control unit 5002 of apparatus 5000 is configured to perform control to display a user interface (such as the item inventory). In this regard, the first control unit 5002 may generate instructions (such as a control signal or the like) which cause an external device to display the user interface. An external device may be any display device communicatively coupled with the apparatus 5000 such as a computer monitor, television or other type of display device. Alternatively, the first control unit 5002 may control a HMD to display the user interface. However, the present disclosure is not particularly limited in this regard, provided that the first control unit 5002 performs control to display a user interface which can then be viewed by a user.

In this specific example, the user interface is an item inventory. However, more generally, a user interface includes any space where one or more items with which a user can interact are displayed to a user. In accordance with embodiments of the disclosure, the first control unit 5002 is configured to perform control to display the user interface (such as the item inventory) upon detection of a first trigger condition.

The trigger condition may be a predetermined user input. The predetermined user input can then be performed by the user in order to cause the first control unit to display the user interface. In some examples, a different predetermined user input may cause a different user interface to be displayed. That is, in the example of a video game, a first predetermined user input may cause the item inventory menu to be displayed while a second, different, predetermined user interface may cause a second, different, menu to be displayed (e.g. a menu from which a user can control settings to save a progress within the game).

The predetermined user input may comprise at least one of: a button press, a voice command, a rotation of a portion of an arm of a user, navigation of a pointer to a relevant option, and/or a gesture. Alternatively, the first trigger condition may be a condition that a user input has not been received for a predetermined period of time.

In this way, the user is able to perform a simple operation in order to cause the desired user interface to be displayed. For a user with a medical condition such as arthritis or the like, it may be difficult for the user to perform operations with their fingers. That is, the user may have limited finger movement. Therefore, use of a simple trigger condition to cause the user interface to be displayed - which does not require precise movement of the user's fingers - may enable a user to more easily control the information processing device.

Once the first trigger condition has been detected (e.g. a predetermined input has been provided by the user 800), the first control unit 5002 is configured to perform control to display the user interface to the user.

According to embodiments of the disclosure, the first control unit 5002 is configured to perform control to display a user interface comprising a plurality of items arranged in a ring that can be highlighted for selection by a user.

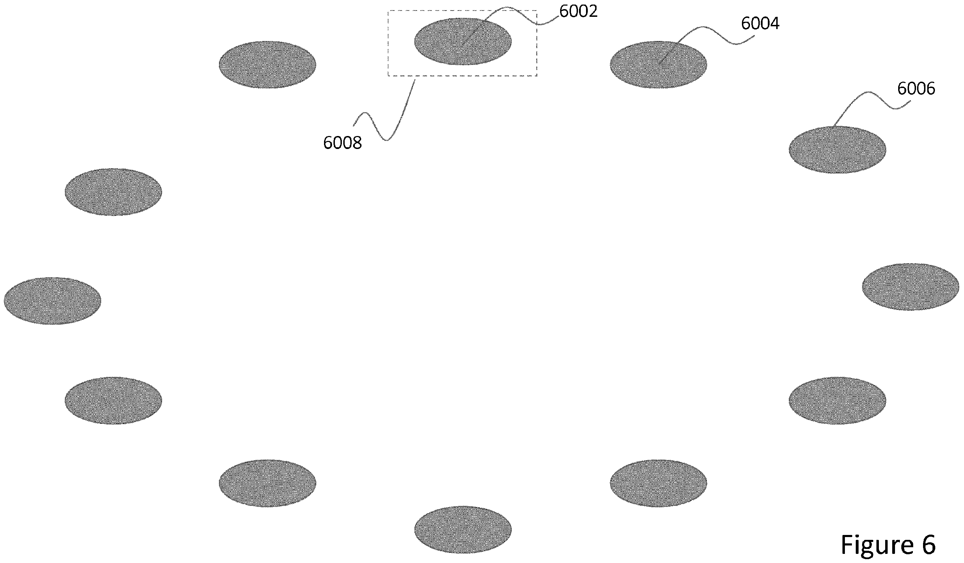

Figure 6 illustrates an example user interface in accordance with embodiments of the disclosure. In the example of Figure 6, the user interface comprises a plurality of items such as items 6002, 6004, 6006. These items are arranged in a ring. In some examples, the ring may be rotatable by the user. In other examples, a selection of an item in the ring can be made by the user by moving a selection box or other type of indicator around the ring. Therefore, the user interface as illustrated in Figure 6 of the present disclosure may be an example of a rotary user interface. However, the present disclosure is not particularly limited to this example user interface illustrated in Figure 6.

A user interface in which the items are displayed as a ring, coupled with the input control mechanism of the present disclosure, can make it very easy for the user to perform a desired input (such as selecting a desired item from the plurality of items) as the user can simply rotate their arm to navigate through the items of the user interface. This process of selecting a desired item from such a user interface will be described in more detail hereinafter.

The user interface illustrated in Figure 6 of the present disclosure may be displayed to a user on a display device such as a screen or the like. For example, an entertainment system such as entertainment system 10 of the present disclosure may be connected to a display device via and A/V port 90. The display device may then display the user interface which has been generated by entertainment system 10 such that the user can view the user interface which has been generated. However, the present disclosure is not particularly limited in this regard. Alternatively, or in addition, the user interface illustrated in Figure 6 of the present disclosure may be displayed to a user on a HMD such as HMD 802 described with reference to Figure 2 of the present disclosure. In this way, the user interface may be displayed to the user as part of a virtual environment.

Indeed, in some examples, the processing circuitry is further configured to perform control to display the ring of the plurality of items around the arm of the user in a virtual environment. That is, the user may be able to see a virtual representation of their arm (or the arm of their character) in the virtual environment. Then, when the user interface is generated and displayed, the user interface may appear around the arm of the user in the virtual environment. Accordingly, if the user looks at their arm in the virtual environment, they will be able to see the user interface displayed around their arm. Having the user interface displayed as a ring around the arm of the user in the virtual environment can make it easier for the user to use the user interface as its appearance and location will be more intuitive for the user.

It will be appreciated that the specific items which form the plurality of items may depend on the type of user interface which has been displayed (i.e. different user interfaces may comprise a different plurality of items). Moreover, the items which form the plurality of items may depend on a condition such as a state of the game. For example, when the user interface is an item inventory menu, the item inventory menu may contain different items for selection by the user depending on which items have been collected by the user during the game. As the user collects different items as they progress through the game, the user interface may be updated accordingly.

In the specific example of Figure 6 of the present disclosure, the ring of the plurality of items is circular. However, a circular arrangement of the plurality of items is only one example of a ring of a plurality of items. Alternatively, the plurality of items may be arranged as a spiral as an example of a ring of a plurality of items. Further alternatively, the plurality of items may be arranged in a semicircular configuration as an example of a ring of a plurality of items. The ring of the plurality of items may also be elliptical, hexagonal, octagonal or the like.

The order and arrangement of items in the ring may be predetermined. Alternatively, the order and arrangement of the items in the ring may be customizable by the user. Alternatively, the order and arrangement of the items in the ring may be random. The present disclosure is not particularly limited in this respect.

The user interface shown in the example of Figure 6 of the present disclosure has only a single layer of items (that is, all the items are shown in the same plane). However, the present disclosure is not particularly limited in this regard. In some examples, the user interface may have a number of different layers. Each layer of the user interface may contain a certain sub-set of the items for selection. The user may then perform an input operation such as a rotation of a portion of their arm (described later in more detail) in order to traverse through the different layers of the user interface.

Moreover, as explained, in some examples the ring of the plurality of items may be a spiral. When the plurality of items are arranged in a spiral, the first control unit 5002 may be configured to display only a portion of the spiral on the user interface. This may be advantageous when the number of items for display (i.e. the number of items forming part of the spiral) is very large. In the example of an item inventory menu, this may occur when the user has collected a very large number of items. If all the items which had been collected (i.e. the entire spiral) were displayed to the user in the user interface, then the individual items may have to be displayed in a very small size and/or very close together. This may make it difficult for the user to distinguish between the different items. However, if only a portion of the spiral is displayed to the user, the number of items displayed to the user at a given instance of time can be controlled. Therefore, the items can be displayed in a larger size and/or with an increased distance between adjacent items of the spiral. This can make it easier for the user to distinguish between the different items. In this case, the first control unit 5002 may then be configured to update the portion of the spiral displayed on the user interface in accordance with a highlighted item. That is, as different items within the spiral are highlighted (e.g. as the user navigates through the spiral) the portion of the spiral displayed to the user as part of the user interface may be updated accordingly. This can make it very easy and efficient for a user to navigate through the user interface when a large number of items are provided.

In the example of Figure 6 of the present disclosure, each of the plurality of items can be highlighted for selection by the user. Selection of an item of the plurality of items may be performed when a second trigger condition is detected. That is, apparatus 5000 may be configured to perform control to select a highlighted one of the plurality of items in response to detection of a second trigger condition. In some examples, the second trigger condition comprises at least one of a button press, a voice command, a rotation of a portion of the arm of the user, and/or a gesture. Alternatively, the second trigger condition may comprise a condition that a user input has not been received for a predetermined period of time. However, the present disclosure is not particularly limited in this regard and selection of an item of the plurality of items can, more generally, be performed on detection of any suitable trigger condition as required depending on the situation to which the embodiments of the disclosure are applied.

In some examples, the second trigger condition may require the same type of input as the first trigger condition. This simplifies use of the information processing apparatus, as it limits the type of input a user must perform.

Selection of an item of the plurality of items when a second trigger condition is detected in this manner can further reduce the precision and complexity of operations which must be performed in order for a user to select a certain item to control the user interface. Indeed, in certain situations, the trigger condition may be detected even without the user operating a user input device (such as when a user input has not been received for a predetermined time). This enables a user to more easily perform input operations to control an information processing apparatus.

Apparatus 5000 may be configured to perform a function associated with the highlighted one of the plurality of items when that item is selected. Of course, the function which is performed when an item is selected will depend both on the item which has been selected and, more generally, on the situation to which embodiments of the present disclosure have been applied. For example, when embodiments of the disclosure are applied to a video game, selection of an item of the user interface may cause a function of the game to be performed. Specifically, for example, when the user interface is item inventory menu, selection of an item of the plurality of items may cause a character controlled by the user to be equipped with that item in the game. Of course, it will be appreciated that the present disclosure is not particularly limited to this specific example.

In this specific example as illustrated in Figure 6 of the present disclosure, the item 6002 is currently highlighted for selection. As such, item 6002 is the item of the plurality of items which can currently be selected by the user. In the example of Figure 6 of the present disclosure, the item which is currently highlighted for selection (here, item 6002) has a marker or other indication which shows that the item has been highlighted for selection. Indeed, in this specific example illustrated in Figure 6, the apparatus is configured to display a box 6008 around the item which has been highlighted for selection in order to show that the item has been highlighted for selection. However, the present disclosure is not particularly limited in this regard. Alternatively, or in addition, a different type of visual indication may be provided in order to show that the item has been highlighted for selection. This may include changing the colour, size or location of the item which has been highlighted for selection. Furthermore, an animation may be shown when the item has been highlighted for selection. For example, the item highlighted for selection may pulse, spin or bounce in order to show that it has been highlighted for selection by the user. Alternatively or in addition, in some examples an audio indication may be provided to inform the user of the item which has been highlighted for selection.

In this way, the user is able to easily identify the item of the plurality of items which has been highlighted for selection.

A user may perform an input operation (described in more detail later) in order to change which item is highlighted for selection. However, in some examples, when the user interface is first generated for display by the first control unit 5002, a default item of the user interface may be highlighted for selection. In some examples, the default item highlighted for selection may be an item of the plurality of items which was most recently used by the user (when the user interface was previously accessed by the user, for example). In other examples, the default item may be the first item in the plurality of items. Alternatively, the default item may the item most recently added to the user interface (e.g. the item most recently collected by the user in the game). Further alternatively, apparatus 5000 may select a random item from the plurality of items as the default item to be highlighted for selection.

Highlighting a default item for selection in this manner may enable a user to more quickly and easily select a desired item for selection.

In some examples, highlighting the item of the plurality of items in this manner performs a preselection of an item of the plurality of items. Indeed, in some examples, apparatus 5000 may perform certain processing when an item has been highlighted, depending on the item which has been highlighted, in order to prepare to perform a function when that item has been selected. As an example, apparatus 5000 may pre-load certain information into memory when an item has been selected in order that the information is readily accessible if that item is selected. This may improve the response time of performing the corresponding function if that item is selected. However, the present disclosure is not particularly limited in this regard.

In this way, control to display a user interface in response to detection of a first trigger condition is performed by the first control unit 5002 of apparatus 5000.

### <Receiving Unit 5004>

As explained with reference to Figure 5 of the present disclosure, receiving unit 5004 is configured to receive an input signal from a user input device.

The user input may be a user input performed by the user once the user interface has been displayed in order to control the user interface in order to highlight an item for selection. For example, when the user interface is an item inventory menu in a video game, the user input performed by the user may be an input to highlight an item shown in the item inventory for selection.

As explained with reference to Figure 5 of the present disclosure, in embodiments of the disclosure the user is able to control a user interface to highlight an item for selection by rotation of a portion of their arm. Therefore, any user input device which is able to provide an input signal indicative of a degree of rotation of the portion of the arm of the user can be used in accordance with embodiments of the disclosure. Different examples of a type of user input device which can be used in accordance with embodiments of the disclosure are described hereinafter.

Receiving unit 5004 may be configured to receive the input signal from the user input device using any suitable wired or wireless connection. It will be appreciated that the type of wired or wireless connection used by the receiving unit 5004 to receive the input signal may depend, at least in part, on the type of user input device which is used by the user.

In some examples, the receiving unit 5004 may be configured to receive the input signal from a user input device held by the user. An input device held by the user may include, for example, a controller such as the DualSense ^{®} controller 80 described with reference to Figure 3 of the present disclosure with rotation of the user's arm being detected by one or more motion detectors in the controller, such as one or more accelerometers and/or gyroscopes, not shown. However, the user input device may more generally be any handheld controller capable of detecting such motion, such as for example a single-hand controller such as the PlayStation Move^{®}. Use of a controller such as controller 80 to provide the input signal to control the user interface may be advantageous, as it can be held by the user with two hands (and therefore may be easier to hold and control than a controller which has to be held with a single hand, for example).

In some examples, the receiving unit 5004 may be configured to receive the input signal from a wearable device worn by the user as the user input device. A wearable device may include any electronic device which can be worn by the user (as opposed to being held by the user) that can similarly detect such motion. The wearable device may include so-called smartwear such as a smart watch, for example. However, the wearable device may also include a fitness tracker or the like. Use of a wearable device to provide the input signal to control the user interface may be advantageous for a user with reduced mobility or dexterity (as they do not need to hold an input device in order to control the information processing device).

In some examples, the receiving unit 5004 may be configured to receive the input signal from a user input device configured to capture an image of the arm of the user. That is, the user input device may be a device (such as a camera or the like) which captures an image of the user. The degree of rotation of the arm of the user can then be identified from this image. Use of an image capture device to provide the input signal to control the user interface may be advantageous for a user with reduced mobility or dexterity (as they do not need to hold an input device in order to control the information processing device).

In this way, receiving unit 5004 of apparatus 5000 is configured to receive an input signal from a user input device.

### <Analysis Unit 5006>

As explained with reference to Figure 5 of the present disclosure, analysis unit 5006 is configured to analyze the input signal to determine a degree of rotation of a portion of the arm of the user.

The analysis which is performed by the analysis unit 5006 will depend, at least in part, on the type of input signal which is received by the receiving unit 5004. However, it will be appreciated that, in general, the analysis is performed in order that the degree of rotation of the portion of the arm of the user can be determined. This enables the user to more easily and reliably control the user interface to highlight an item of the plurality of items in the ring for selection. That is, control to highlight an item of the plurality of items for selection by the user can be performed by the user through a rotation of a portion of their arm and thus does not require precise operations to be performed by the user (such as operation of a large number of buttons with their fingers). Therefore, it is easier for a user to control the information processing apparatus (e.g. it is easier to access menus and options within those menus). In particular, this may be advantageous for a user with reduced mobility or dexterity.

In some examples, the analysis unit 5006 may determine the type of user input device which has been used by the user from the input signal which is received. That is, the input signal may include information indicative of the type of the user input device which has been used, for example. However, in other examples, the type of user input device may be preconfigured by the user. The analysis unit 5006 can then use this information in order to determine the degree of rotation of the portion of the arm of the user. The present disclosure is not particularly limited in this respect.

Furthermore, it will be appreciated that the portion of the arm of the arm of the user which is monitored in accordance with embodiments of the disclosure is not particularly limited and may change in accordance with the type of user input device which is used by the user. In some examples, the processing circuitry may be configured to determine a degree of rotation of the hand and/or wrist of the user as the portion of the arm of the user. However, in other examples, more generally, any portion of the arm of the user can be used. This may be of relevance for example in the case of a user who has lost a hand or part of their arm.

Consider an example where the input signal is received from a user input device which is an input device held by the user. Here, the input signal received from the user input device may include information from one or more accelerometers and/or a gyroscopes contained in the user input device, as noted elsewhere herein. Thus, the analysis unit 5006 may be configured to determine the degree of rotation of the portion of the arm of the user based on the information from the accelerometer or gyroscope contained in the user input device. If the user rotates their arm when holding the user input device, the input signal from the accelerometer or gyroscope contained in the user input device will change such that the analysis unit 5006 can determine the degree of rotation of the arm of the user.

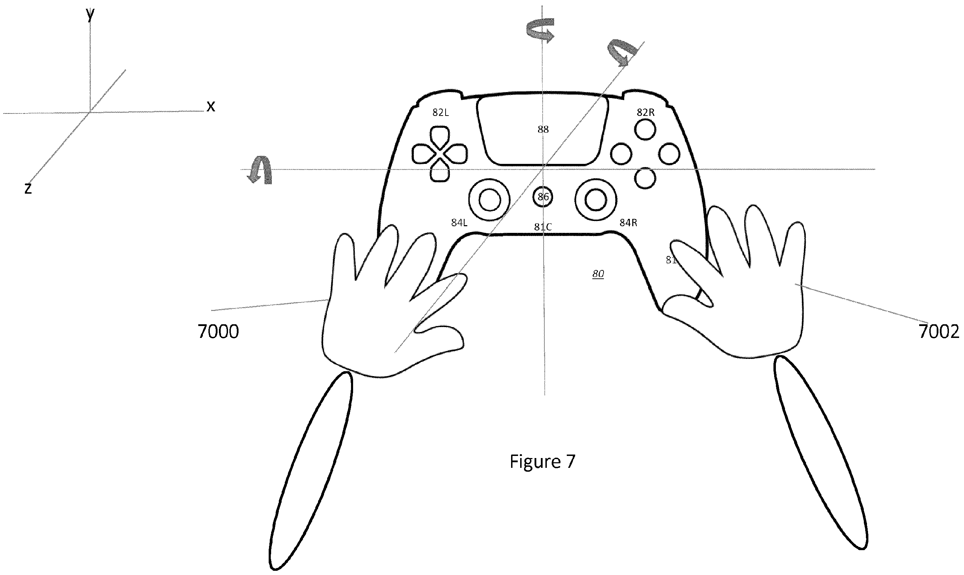

Figure 7 of the present disclosure illustrates an example of a control operation in accordance with embodiments of the disclosure. In this example, the user input device is a DualSense ^{®} controller 80 as described with reference to Figure 3 of the present disclosure. In this example, the controller 80 is held by the hands 7000 and 7002 of a user. However, it will be appreciated that the example of Figure 7 is not to be interpreted to be exclusive or limiting, but rather exemplary or illustrative.

As noted previously herein, the DualSense ^{®} controller 80 contains accelerometer and gyroscope sensors. Therefore, the DualSense ^{®} controller 80 is able to provide an input signal (which can be received by receiving unit 5004) which indicates a degree of rotation of the controller 80. As the controller 80 is held by the hands 7000 and 7002 of the user, the rotation of the controller can be analyzed to determine a degree of rotation of a portion of the user's arm (here, the user's hands).

In this example, the user is able to rotate the controller around one or more of the x, y and z axis as illustrated in Figure 7 of the present disclosure. Therefore, by rotating the controller 80, the user is able to provide a user input to perform control to highlight an item of the plurality of items for selection.

In some examples, a determined degree of rotation may be an absolute rotation of the portion of the user's arm from a default position. In other examples, a determined degree of rotation of the user's arm may be a relative rotation of the user's arm from a previous position. The present disclosure is not particularly limited in this regard.

Accordingly, in the example of Figure 7 of the present disclosure, the analysis unit 5006 is configured to analyze the input signal comprising information from one or more accelerometer or gyroscopic sensors of the controller 80 in order to determine a degree of rotation of the user's arm.

However, the present disclosure is not particularly limited in this regard, and the analysis unit 5006 may be configured to determine a degree of rotation of the portion of the user's arm from one or more other types of input signal.

Consider an example where the input signal is received from a user input device which is captures an image of the arm of the user. In this example, the receiving unit 5006 of apparatus 5000 may be configured to perform image processing on the input signal in order to identify a degree of rotation of a portion of the user's arm.

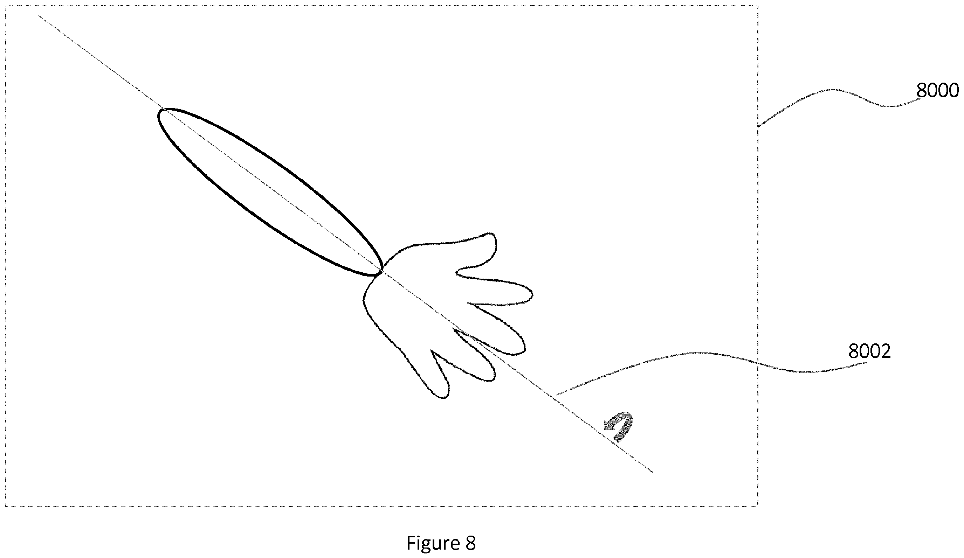

Figure 8 of the present disclosure illustrates an example of a control operation in accordance with embodiments of the disclosure. In this example, an image of the user's arm is illustrated, as may be captured by an image capture device and provided to the apparatus 5000 as an input signal. However, it will be appreciated that the example of Figure 8 is not to be interpreted to be exclusive or limiting, but rather exemplary or illustrative.

Once the receiving unit 5004 has received the image 8000 from the user input device, the analysis unit 5006 may perform image processing on the image in order to determine the location of the user's arm and, furthermore, to determine a degree of rotation of the arm of the user (either an absolute or relative degree of rotation). The image processing may be comprise any computer vision technique for identifying the arm of the user in the image. This may include deep learning or machine learning processing, for example. In this example, by rotating their arm around the axis 8002 illustrated in Figure 8, the user can provide an input to perform control to highlight an item of the plurality of items for selection.

Of course, it will be appreciated that techniques for obtaining position information from the input signal other than those described here in relation to the Figures may be implemented in accordance with embodiments of the disclosure.

Return now to the example of Figure 6 of the present disclosure. In this example, a user interface with a plurality of items is shown. This user interface may be a user interface such as a menu provided to a user who is playing a game on an entertainment system such as entertainment system 10 described with reference to Figure 2 of the present disclosure. In particular, the user interface may be an item inventory selection menu as may be provided to a user who is playing a video game on the entertainment system. This menu can be used by the user (such as user 800) to choose which items should be used for their character at certain points in the game.

In this example, the user may wish to select item 6006 of the user interface for their character in the game. However, as explained, it can be difficult for some user's to perform the control necessary operation to select a desired item from the plurality of items which are displayed. This may be particularly difficult for a user who has more restricted levels of mobility. Indeed, some users may suffer from a condition which makes their hand shake or tremor which can thus make it even more difficult for the user to perform the necessary control in order to select a desired item. Small involuntary movements arising from a hand shake or tremor may even cause the user to accidentally highlight an incorrect item for selection. This can be very frustrating for the user and may cause the user to be unable to reliably control the entertainment system.

Accordingly, in some examples, the analysis unit 5006 is further configured to generate a resultant input signal by applying a low pass filter to the input signal received from the user device; and analyze the resultant signal to determine a degree of rotation of a portion of an arm of a user.

By applying a low pass filter to the input signal, high frequency signals (such as a rapid hand tremor) can be discounted from the determination of the degree of rotation of the arm of the user. However, deliberate movements performed by the user (which will be performed with a lower frequency) may still be analyzed in order to determine the degree of rotation of the arm of user.

Thus, a user who makes small involuntary movements (arising from a hand shake or tremor for example) can still reliably and accurately control the information processing apparatus (such as the entertainment system 10).

In this way, analysis unit 5006 is configured to analyze the input signal to determine a degree or rotation of a portion of the arm of the user.

### <Second Control Unit 5008>

As explained with reference to Figure 5 of the present disclosure the second control unit 5008 is configured to perform control to update the user interface in accordance with the determined degree of rotation of the portion of the arm of the user to highlight one of the plurality of items for selection.

Consider again the example user interface described with reference to Figure 6 of the present disclosure. In this example, a menu (or other type of user interface) is displayed to a user. Specifically, in this example, the menu is an item inventory in a game from which a user can select one or more items for their character. Item 6002 may be a helmet, item 6004 may be a shield, and item 6006 may be a sword, for example.

In the example of Figure 6, the item 6002 is highlighted for selection by the user. As such, if the user makes a selection, the equipment currently used by their character in the game will be updated with the helmet. However, the second control unit is configured to perform control to update the user interface in accordance with the determined degree of rotation of the portion of the arm of the user to highlight one of the plurality of items for selection. Therefore, if the user rotates their arm (such that the degree of rotation of their arm changes) a different item will be highlighted for selection. For example, if the user rotates their arm clockwise item 6004 may be highlighted for selection. The second control unit may then perform control to update the user interface such that the user can see that the item 6004 has been highlighted for selection. At this stage, if the user makes a selection, the equipment currently used by their character in the game will be updated with the shield (as item 6004 is highlighted for selection).

Hence more generally, in some examples, the second control unit 5008 is further configured to update the user interface to highlight an item of the plurality of items adjacent to a highlighted item in the ring in accordance with the determined degree of rotation of the portion of the arm of the user.

Coupling a user interface in which a plurality of items are arranged in a ring with a control mechanism as described herein enables a user to more easily and efficiently perform control to highlight an item for selection. Indeed, such control can be performed with a simple movement which can easily be performed by a user as the user interface is updated in accordance with the determined degree of rotation of the arm of the user. As such, a user can more easily perform input operations to control an information processing apparatus. This makes it easier to access menus and options on an information processing apparatus, for example.

The control performed to update the user interface will depend, at least in part, on the way in which the user interface is displayed to the user. For example, if the user interface is displayed to a user on a screen, the control may include a control signal causing the screen to show an updated user interface to the user. However, if the user interface is displayed to the user on a HMD, the control may include a control signal causing the HMD to show an updated user interface to the user.

In some examples, the second control unit 5008 may be configured to perform one or more additional control options (in addition to highlighting an item for selection) in accordance with the determined degree of rotation of the arm.

In a first example, when the user interface is displayed as a ring around the arm of the user in a virtual environment, the second control unit 5008 may be configured to perform control of a radial offset of the ring from the arm of the user to display the ring of the plurality of items. Such a control may be performed in accordance with an input provided by the user. For example, an input instruction may indicate that the radial offset of the ring from the arm of the user should be increased. Alternatively, the control may be performed in accordance with a setting which has been preselected by the user. It will be appreciated that increasing the radial offset of the ring from the arm of the user in the virtual environment will increase the size (such as the circumference) of the user interface which is displayed as a ring. Therefore, the space between the items in the user interface can be increased and/or the size of the individual items in the user interface can be increased. This can make it easier for a user to see the individual items in the user interface. Accordingly, it is easier for a user to perform control to highlight an item for selection without performing precision movements or control.

Alternatively or in addition, when the user interface is displayed as a ring around the arm of the user in a virtual environment, the second control unit 5008 may be configured to perform control of an axial offset of the ring from the arm of the user to display the ring of the plurality of items. Such a control may be performed in accordance with an input provided by the user. For example, an input instruction may indicate that the axial offset of the ring from the arm of the user should be increased. Alternatively, the control may be performed in accordance with a setting which has been preselected by the user. Performing control of the axial offset of the ring from the arm of the user allows the items of the ring to be moved along the length of the arm of the user. This enables the items to be moved from a busy portion of the virtual environment (e.g. on top of the user's wrist, where a watch may be displayed) to a quieter portion of the virtual environment. This ensures that the items of the user interface do not interfere with other items shown in the virtual environment. Moreover, it makes it easier for the user to see the items of the user interface in the virtual environment. In addition, performing control of the axial offset of the ring from the arm of the user allows the items to be moved such that they can be positioned at an location in the virtual environment which is easier for the user to access. In particular, the items may be moved so that they are on the end of the user's hand in the virtual environment. This makes it easier and more intuitive for the user to perform control to highlight an item for selection (e.g. by rotating their arm to point at an item which should be highlighted for selection).

Alternatively or in addition, the second control unit 5008 may be configured to control the number of items forming the plurality of items of the ring. This control may be performed whether the user interface is to be displayed on a display device such as a screen or a HMD (to form a virtual environment). In some examples, the number of items forming the plurality of items of the ring may be controlled in accordance with a user operation or a setting which has been preselected by the user. Alternatively, the number of items in the user interface may be configured for each type of user interface. Alternatively, the number of items in the user interface may be controlled in accordance with a state of a game. For example, if the user is currently in a portion of a game where the game is very busy (with lots of information being displayed to the user) then the number of items in the user interface may be decreased such that the user can more quickly identify an item for selection without becoming distracted from the game.

Changing the number of items which are displayed in the user interface can make it easier for the user to select a desired item. For example, when the number of items is decreased it can be easier for a user to see an item and highlight that item for selection. In addition changing the number of items in the user interface can enable the distance between the items to be increased and/or the size of the items to be increased. This can also make it easier for the user to highlight a desired item for selection.

Alternatively or in addition, when the user interface is overlaid on a background image (such that both the user interface and the background image can be seen by the user), the second control unit 5008 may be configured to control a contrast between an item of the plurality of items of the ring and a portion of the background image on which the item of the plurality of items is overlaid, to display the ring of the plurality of items. Again, the control unit 5008 may be configured to perform the control in accordance with a user input or a configuration which has been preselected by the user. Alternatively, the control unit 5008 may be configured to perform the control automatically (e.g. depending on the background image, for example). By increasing the contrast between the user interface and the background image, it can be easier for the user to identify a desired item from the plurality of items (as the items can be more easily distinguished from the background) thus making it easier for a user to highlight a desired item for selection.

Of course, it will be appreciated that the present disclosure is not particularly limited to these specific examples of control which may be performed by the second control unit 5008 to display the user interface and that the present disclosure is not particularly limited in this regard.

Now, as has been explained, when the user rotates their arm, the second control unit 5008 performs control to update the user interface in accordance with the determined degree of rotating of the portion of the arm of the user to highlight one of the plurality of items for selection. In some examples, this may include moving a display element (such as highlighting box 6008 illustrated in Figure 6 of the present disclosure). However, in other examples, the ring which forms the user interface may itself be rotated in accordance with the degree of rotation of the arm of the user. In the example of Figure 6 of the present disclosure, the item which has been highlighted for selection may be an item at a certain position in the ring (for example, the item at the top of the ring as shown in Figure 6). Thus, in the example of Figure 6 of the present disclosure, the item highlighted for selection may be the item 6002 (which is currently located at the top of the ring). However, if the user rotates their arm, the ring rotates such that the item 6002 is no longer located at the top of the ring. For example, the user rotates their arm anticlockwise along (along the axis 8002 illustrated in Figure 7 of the present disclosure) then the ring rotates such that the item 6004 replaces the item 6002 at the top of the ring. Accordingly, by rotating their arm to rotate the ring of items, the user can easily and intuitively change the item which is highlighted for selection.

In some examples, it may be desirable for the user to be able to more quickly navigate through a user interface. However, as the number of items in the user interface increases, it can be more difficult and cumbersome for the user to navigate through the user interface.

Accordingly, in some embodiments of the disclosure, the second control unit 5008 is configured to perform control to rotate the ring of the plurality of items at a rate other than the rate of rotation of the arm of the user. As an example, when the number of items in the user interface is large, the user may want to navigate quickly through the user interface. As such, in response to a small rotation of the user's arm, the second control unit 5008 may be configured to rotate the ring of the user interface by an amount exceeding this small rotation. By means of a more specific example, it will be appreciated that if the user rotated their arm by a small amount such as 5 degrees, the second control unit 5008 may be configured to rotate the user interface by 10 degrees (an amount double the degree of rotation of the arm of the user). This enables the user to more quickly navigate through the user interface. Moreover, it may enable a user who has more restricted mobility to more easily navigate through the user interface (as only a relatively small movement is required in order to navigate through the user interface). However, it will be appreciated that the present disclosure is not limited to the specific example of a rotation rate twice that of the degree of rotation of the user's arm. The differential between the degree of rotation of the user's arm and the degree of rotation of the user interface may be much bigger or much smaller than this very specific example.

Indeed, in some examples, the degree of rotation of the user's arm may exceed the degree of rotation of the user interface. That is, in response to a large degree of rotation of the user's arm the second control unit 5008 may be configured to rotate the ring of the user interface only by a small amount. By means of a more specific example, it will be appreciated that if the user rotate their arm by a large amount such as 10 degrees, the second control unit may be configured to rotate the user interface by 5 degrees (an amount half that of the degree of rotation of the arm of the user). This enables a user to more easily perform accurate control of the user interface without requiring precision movement to be performed. However, it will be appreciated that the present disclosure is not limited to the specific example of a rotation rate half that of a degree of rotation of the user's arm. The differential between the degree of rotation of the user's arm the degree of rotation of the user interface may be much bigger or much smaller than this very specific example.

Furthermore, in some examples the second control unit 5008 is configured to perform control to select the rate to rotate the ring of the plurality of items in accordance with an orientation of the arm of the user. This enables the user to more easily select a rate to rotate the ring of the plurality of items, which provides the user with increased control. In particular, it may then be possible for the user to rotate the ring at a different rate (compared to the degree of rotation of the user's arm) for different situations (such as different rates of rotation for different menus). This improves flexibility of control and therefore improves efficiency of operation of the information processing apparatus in different situations and environments.

As an example, the second control unit 5008 may be configured to rotate the user interface at a first rate (e.g. double the degree of rotation of the user's arm) if the user rotates their arm while the arm is in a first orientation (e.g. parallel to the floor, for example). The second control unit 5008 may then be configured to rotate the user interface at a second, different, rate (e.g. half the degree of rotation of the user's arm) if the user rotates their arm while the arm is in a second orientation (e.g. perpendicular to the floor, for example). In this way, the user can more easily and intuitively perform input operations to control an information processing apparatus.

The apparatus 5000 may be configured to determine the orientation of the user's arm in a number of different ways. Therefore, the specific way of determining the orientation of the user's arm is not particularly limited in accordance with the embodiments of the disclosure. However, it will be appreciated that the orientation of the user's arm may be determined in the same way as the degree of rotation of the user's arm is determined. However, in some examples the orientation of the user's arm may be determined in a different way to the way in which the degree of rotation of the user's arm is determined. When using a controller 80 as described in detail with reference to Figure 3 of the present disclosure, the orientation of the user's arm may be determined by the output of one or more sensors of the controller 80 (including one or more of an accelerometer and gyroscope sensor). However, in other examples, the orientation of the user's arm may be determined by analysing an image or set or images of the user captured by an image capture device. Further alternatively, the orientation of the user's arm may be determined based on the output of one or more sensors of an external device such as a wearable device worn by the user, for example.

In some examples, a calibration may be performed before use in order to enable the orientation of the arm of the user to be determined with even greater accuracy and reliability.

Of course, it will be appreciated that the use of the orientation of the arm of the user is not limited to control of the rate of rotation. Alternatively, in some examples, the second control unit 5008 may be configured to use the determined orientation of the arm of the user to perform control other than adaption of the rate of rotation of the user interface.

As an example, the second control 5008 may be configured to select a configuration of items in the ring in accordance with the orientation of the arm of the user. In some examples, the configuration of items in the ring includes one or more selected from the list consisting of: i) a radius of the ring; and ii) a set of items forming the plurality of items.

For example, if the user moves their arm to a first orientation (e.g. parallel to the floor) the ring may be displayed with a first size. However, if the user then moves their arm to a second, different, orientation (e.g. perpendicular to the floor) the size of the ring may be displayed with a second, different, size. In this way, the user can easily control the size of the user interface and select a size of user interface which is most suitable for a given situation. Thus, the user can have fine levels of control over the information processing apparatus through simple and intuitive controls, which can easily be performed by any user (including a user with restricted levels of mobility, for example).

However, the present disclosure is not particularly limited in this regard, and the determined orientation of the arm of the user may more generally be used by the second control unit 5008 to select a configuration of items in the ring other that the radius of the ring and the set of items forming the plurality of items in the ring.

In some examples of the present disclosure, the rotation of the ring in response to the determination of the degree of rotation of the arm of the user may be a continuous rotation of the ring in accordance with the degree of rotation of the portion of the arm of the user. For example, it may be possible that rotation of the arm of the user rotates the ring by a certain number of degrees such that no item is currently highlighted for selection (e.g. with the rotation of the ring leaving the top of the ring between item 6004 and 6006, for example). However, a continual rotation of the ring with the determined degree of rotation of the portion of the arm of the user in this manner may mean that it is more difficult for a person to select the desired item in the ring (as a more accurate degree of rotation of the arm of the user is required to highlight an item for selection).

Accordingly, in some examples, the second control unit 5008 is configured to segment the ring in accordance with a number of items forming the plurality of items and perform control to update the user interface in accordance with the determined degree of rotation of the portion of the arm of the user to highlight one of the plurality of items for selection in a segment adjacent to a segment comprising a currently highlighted item when the determined degree of rotation of the portion of the arm exceeds a threshold value. This enables a step-by-step rotation of the ring in accordance with the determined degree of rotation of the arm of the user to be performed, which may make it easier for a use to select a desired item from the plurality of items of the user interface.

Consider, again, the example illustrated with reference to Figure 6 of the present disclosure.

In this example, an item 6002 is currently shown as being highlighted for selection by the user. In this specific example, the fact that item 6002 is highlighted for selection by the user is shown by the fact that a box 6008 is displayed around the item 6002.

In this example, the second control unit 5008 is configured to segment the ring in accordance with the number of items forming the plurality of items. Here, there are 12 items in the ring of items. As such, the user interface is segmented into 12 equal segments each of 30 degrees. Then, instead of rotating the ring continuously with rotation of the arm of the user, the second control unit 5008 may be configured such that the ring is only rotated to highlight the next item for selection (e.g. item 6004 in this example) when the determined degree of rotation of the user exceeds 30 degrees. For any value of determined rotation of the arm of the user less than 30 degrees, the item 6002 will remain as the item highlighted for selection by the user. This can make it easier for the user to accurately and reliably highlight an item for selection, as small accidental mounts of rotation of the arm will not cause a change in the item highlighted for selection.

Of course, it will be appreciated that the present disclosure is not particularly limited to this example of 12 equal segments of 30 degrees. Instead, the number of segments and the size of each segment can change in accordance with the number of items of the user interface and the priority of each item (with an item of higher priority (e.g. likelihood of selection by the user) being given a segment of increased size in comparison to other items of the user interface). Priority (such as likelihood of selection by the user) may be determined in accordance with previous operations performed by the user. However, the present disclosure is not particularly limited in this respect.

Moreover, the threshold value does not necessarily have to correspond to the interface between the segments. That is, a threshold for rotation to the next segment may be more or less than the interface between the segments (e.g. a rotation of 45 degrees may be required for rotation to the next 30 degree segment). Furthermore, a degree of hysteresis may be applied to the threshold of rotation to ensure that when the determined degree of rotation of the arm of the user is close to the threshold value, a continual rapid switching between adjacent items of the user interface is not performed.

In this way, the second control unit 5008 is configured to perform control to update the user interface in accordance with the determined degree of rotation of the portion of the arm of the user to highlight one or the plurality of items for selection.

Hence more generally, the degree of rotation of the user's arm may either be used to directly control the degree of rotation of the user interface, with a 1:1 ratio making the Ul exactly track the user's rotation, whilst other ratios can either increase or decrease the multiple by which the rotation occurs. Alternatively, the rotation of the user's arm can trigger a carousel-type rotation of the Ul, potentially for as long as the user's arm remains rotated by a threshold amount. In this way the user can rotate the Ul to the left or right with a potentially small rotation left or right. Optionally the speed of rotation of the Ul can be proportional to the amount of arm rotation, or different speeds can be associated with different arm rotation thresholds. Optionally in either case the rotation of the Ul can be continuous or step-wise, with steps defined by the number of objects in the Ul. Optionally navigation of the Ul using such techniques, or control of modes therein, may be activated or modified depending on the overall orientation of the user's arm; for example if the user's arm is in a substantially horizontal position, as if looking at a watch, then UI rotation proportional to arm rotation may be used. Meanwhile if the user's arm is in a substantially vertical position (e.g. hanging down), then UI rotation as a carousel may be used, because the user does not have such good visual feedback on the extent of their arm rotation. However, it will be appreciated that these are nonlimiting examples, and any suitable choice of control (or disabling of control) as a function of position / orientation of the user's arm, or by any other parallel input (such as a voice command) may optionally be included.

### <Advantageous Technical Effects>

An apparatus 5000 is provided in accordance with embodiments of the disclosure. As such, according to embodiments of the disclosure, a user may more easily perform input operations to control an information processing apparatus. This makes it easier to access menus and options on an information processing apparatus, for example.

In particular, the coupling of the rotary style user interface (where a plurality of items are displayed in a ring) with the control mechanism based on the determined degree of rotation of the arm of the user (as described in accordance with embodiments of the disclosure) makes it much easier for a user to navigate through the user interface and highlight a desired item for selection. In particular, a user having decreased mobility or who is less able to perform input operations with a high degree of dexterity may find it much easier to perform navigate through a user interface in accordance with embodiments of the disclosure than compared to performing numerous complex input operations with an input device such as a joystick or a mouse.

Furthermore it will be appreciated that whilst a game is used to illustrate the embodiments herein, the embodiments are not limited to games; any computer-controlled UI amendable to a looped highlighting and selection scheme may be controlled in this manner, including for example office applications and medical devices, such as for example dosage selection and other Uls for user-controlled medical devices.

However, it will be appreciated that the present disclosure is not particularly limited to these advantageous technical effects. Other advantageous technical effects will become apparent to the skilled person when reading the disclosure.

### <Method>

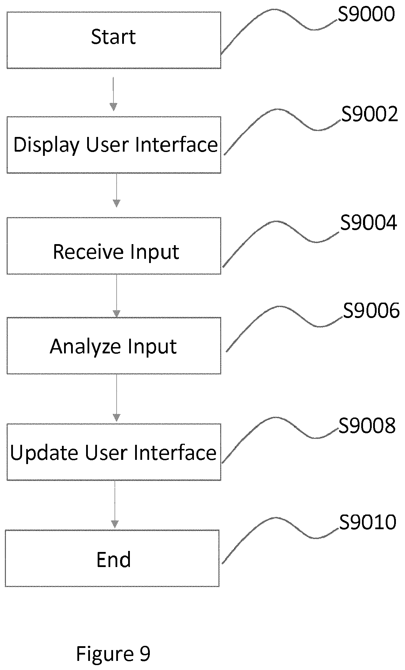

Furthermore, an information processing method is provided in accordance with embodiments of the disclosure. An example of this method is illustrated in Figure 9 of the present disclosure. The method of Figure 9 may be implemented by an apparatus such as apparatus 1000 or apparatus 5000 of the present disclosure. The method may also be performed by an entertainment system such as entertainment system 10 as described with reference to Figure 2 of the present disclosure.

The method of Figure 9 starts at step S9000 and proceeds to step S9002.

In step S9002, the method comprises performing control to display a user interface in response to detection of a first trigger condition, the user interface comprising a plurality of items, arranged in a ring, that can be highlighted for selection by a user. The method then proceeds to step S9004.

In step S9004, the method comprises receiving an input signal from a user input device. The method then proceeds to step S9006.

In step S9006, the method comprises analyzing the input signal to determine a degree of rotation of a portion of an arm of a user. The method then proceeds to step S9008.

In step S9008, the method comprises performing control to update the user interface in accordance with the determined degree of rotation of the arm of the user to highlight one of the plurality of items for selection.

The method then proceeds to and ends with step S9010.

Of course, it will be appreciated that the embodiments of the present disclosure are not particularly limited to the specific example method illustrated in Figure 9 of the present disclosure. For example, while the steps of the method of Figure 9 are illustrated in a particular order, the present disclosure is not limited in this regard. A number of the method steps shown in Figure 9 may be performed in a different order. Alternatively, or in addition, a number of the method steps shown in Figure 9 may be performed in parallel. As an example, the step S9002 to perform control to display a user interface in response to detection of a first trigger condition may be performed in parallel to the step S9004 for receiving an input signal from the user input device.

While embodiments of the present disclosure have been described with reference to a specific example of a user interface - such as an item inventory menu as may be displayed to a user in a video game - it will be appreciated that the present disclosure is not particularly limited in this regard. That is, embodiments of the disclosure can be applied to any situation which requires use of menus for selection of options on an information processing apparatus. Indeed, embodiments of the disclosure can more generally be applied to any situation where a user interface with a plurality of items can be generated in order for the user to control an information processing apparatus.

### <Clauses>

Furthermore, embodiments of the present disclosure can be arranged in accordance with the following numbered clauses:
Clause 1. An information processing apparatus comprising processing circuitry configured to perform control to display a user interface in response to detection of a first trigger condition, the user interface comprising a plurality of items, arranged in a ring, that can be highlighted for selection by a user, receive an input signal from a user input device, analyze the input signal to determine a degree of rotation of a portion of an arm of a user, and perform control to update the user interface in accordance with the determined degree of rotation of the portion of the arm of the user to highlight one of the plurality of items for selection.
Clause 2. The information processing apparatus according to Clause 1, wherein the first trigger condition is a predetermined user input.
Clause 3. The information processing apparatus according to Clause 2, wherein the predetermined user input comprises at least one of: a button press, a voice command, a rotation of a portion of an arm of a user, and/or a gesture; or wherein the first trigger condition is a condition that a user input has not been received for a predetermined period of time.
Clause 4. The information processing apparatus according to any of Clauses 1 to 3, wherein the processing circuitry is further configured to receive the input signal from a user input device held by the user.
Clause 5. The information processing apparatus according to any of Clauses 1 to 3, wherein the processing circuitry is further configured to receive the input signal from a wearable device worn by the user as the user input device.
Clause 6. The information processing apparatus according to any of Clauses 1 to 3, wherein the processing circuitry is further configured to detect the input signal from a user input device configured to capture an image of the arm of the user.
Clause 7. The information processing apparatus according to any preceding Clause, wherein the processing circuitry is further configured to perform control to display the ring of the plurality of items around the arm of the user in a virtual environment.
Clause 8. The information processing apparatus according to Clause 7, wherein the processing circuitry is further configured to perform control of one or more selected from the list consisting of a radial offset of the ring from the arm of the user, an axial offset of the ring from the arm of the user, a number of items forming the plurality of items of the ring, and when the user interface is overlaid on a background image, a contrast between an item of the plurality of items of the ring and a portion of the background image on which the item of the plurality of items is overlaid, to display the ring of the plurality of items.
Clause 9. The information processing apparatus according to any preceding Clause, wherein the processing circuitry is further configured to perform control to rotate the ring of the plurality of items at a rate other than the rate of rotation of the arm of the user.
Clause 10. The information processing apparatus according to Clause 9, wherein the processing circuitry is configured to perform control to select the rate to rotate the ring of the plurality of items in accordance with an orientation of the arm of the user.
Clause 11. The information processing apparatus according to any preceding Clause, wherein the processing circuitry is further configured to generate a resultant input signal by applying a low pass filter to the input signal received from the user device; and analyze the resultant signal to determine a degree of rotation of a portion of an arm of a user.
Clause 12. The information processing apparatus according to any preceding Clause, wherein the processing circuitry is further configured to perform control to select a configuration of items in the ring in accordance with the orientation of the arm of the user.
Clause 13. The information processing apparatus according to Clause 12, wherein the configuration of items in the ring includes one or more selected from the list consisting of a radius of the ring, and a set of items forming the plurality of items.
Clause 14. The information processing apparatus according to any preceding Clause, wherein the processing circuitry is further configured to segment the ring in accordance with a number of items forming the plurality of items and perform control to update the user interface in accordance with the determined degree of rotation of the portion of the arm of the user to highlight one of the plurality of items for selection in a segment adjacent to a segment comprising a currently highlighted item when the determined degree of rotation of the portion of the arm exceeds a threshold value.
Clause 15. The information processing apparatus according to any preceding Clause, wherein the processing circuitry is further configured to perform control to select a highlighted one of the plurality of items in response to detection of a second trigger condition.
Clause 16. The information processing apparatus according to Clause 15, wherein the second trigger condition comprises at least one of a button press, a voice command, a rotation of a portion of the arm of the user, and/or a gesture; or wherein the second trigger condition is a condition that a user input has not been received for a predetermined period of time.
Clause 17. The information processing apparatus according to Clause 15 or 16, wherein the processing circuitry is further configured to perform a function associated with the highlighted one of the plurality of items when that item is selected.
Clause 18. The information processing apparatus according to any preceding Clause, wherein the processing circuitry is further configured to determine a degree of rotation of the hand and/or wrist of the user as the portion of the arm of the user.
Clause 19. The information processing apparatus according to any preceding Clause, wherein the ring of the plurality of items is circular or wherein the ring of the plurality of items is a spiral.
Clause 20. The information processing apparatus according to Clause 19, wherein for a spiral ring the processing circuitry is further configured to display only a portion of the spiral on the user interface and to update the portion of the spiral displayed on the user interface in accordance with a highlighted item.
Clause 21. The information processing apparatus according to any preceding Clause, wherein the processing circuitry is further configured to update the user interface to highlight an item of the plurality of items adjacent to a highlighted item in the ring in accordance with the determined degree of rotation of the portion of the arm of the user.
Clause 22. An information processing method, comprising performing control to display a user interface in response to detection of a first trigger condition, the user interface comprising a plurality of items, arranged in a ring, that can be highlighted for selection by a user, receiving an input signal from a user input device, analyzing the input signal to determine a degree of rotation of a portion of an arm of a user, and performing control to update the user interface in accordance with the determined degree of rotation of the portion of the arm of the user to highlight one of the plurality of items for selection.
Clause 23. A computer program comprising instructions which, when implemented by a computer, cause the computer to perform a method of performing control to display a user interface in response to detection of a first trigger condition, the user interface comprising a plurality of items, arranged in a ring, that can be highlighted for selection by a user, receiving an input signal from a user input device, analyzing the input signal to determine a degree of rotation of a portion of an arm of a user, and performing control to update the user interface in accordance with the determined degree of rotation of the portion of the arm of the user to highlight one of the plurality of items for selection.
Clause 24. A non-transient computer readable storage medium comprising the computer program according to claim 23.
Clause 25. An information processing system comprising a user input device, and an information processing apparatus, the information processing apparatus comprising processing circuitry configured to perform control to display a user interface in response to detection of a first trigger condition, the user interface comprising a plurality of items, arranged in a ring, that can be highlighted for selection by a user, receive an input signal from the user input device, analyze the input signal to determine a degree of rotation of a portion of an arm of a user, and perform control to update the user interface in accordance with the determined degree of rotation of the portion of the arm of the user to highlight one of the plurality of items for selection.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

The following numbered clauses describe matter that may be combined with embodiment corresponding to the claims as indicated:
Clause 1. The information processing apparatus according to claim 1, wherein the first trigger condition is a predetermined user input.
Clause 2. The information processing apparatus according to clause 1, wherein the predetermined user input comprises at least one of: a button press, a voice command, a rotation of a portion of an arm of a user, and/or a gesture; or wherein the first trigger condition is a condition that a user input has not been received for a predetermined period of time.
Clause 3. The information processing apparatus according to any of claims 1 to 3, wherein the processing circuitry is further configured to receive the input signal from a wearable device worn by the user as the user input device.
Clause 4. The information processing apparatus according to any of claims 1-10 and clauses 1-3, wherein the processing circuitry is further configured to segment the ring in accordance with a number of items forming the plurality of items and perform control to update the user interface in accordance with the determined degree of rotation of the portion of the arm of the user to highlight one of the plurality of items for selection in a segment adjacent to a segment comprising a currently highlighted item when the determined degree of rotation of the portion of the arm exceeds a threshold value.
Clause 5. The information processing apparatus according to any of claims 1-10 and clauses 1-4, wherein the processing circuitry is further configured to perform control to select a highlighted one of the plurality of items in response to detection of a second trigger condition.
Clause 6. The information processing apparatus according to clause 5, wherein the second trigger condition comprises at least one of a button press, a voice command, a rotation of a portion of the arm of the user, and/or a gesture; or wherein the second trigger condition is a condition that a user input has not been received for a predetermined period of time.
Clause 7. The information processing apparatus according to clause 5 or 6, wherein the processing circuitry is further configured to perform a function associated with the highlighted one of the plurality of items when that item is selected.
Clause 8. The information processing apparatus according to any of claims 1-10 and clauses 1-7, wherein the processing circuitry is further configured to determine a degree of rotation of the hand and/or wrist of the user as the portion of the arm of the user.
9. The information processing apparatus according to any of claims 1-12 and clauses 1-8, wherein the processing circuitry is further configured to update the user interface to highlight an item of the plurality of items adjacent to a highlighted item in the ring in accordance with the determined degree of rotation of the portion of the arm of the user.

## Claims

1. An information processing apparatus comprising processing circuitry configured to:
perform control to display a user interface in response to detection of a first trigger condition, the user interface comprising a plurality of items, arranged in a ring, that can be highlighted for selection by a user;
receive an input signal from a user input device;
analyze the input signal to determine a degree of rotation of a portion of an arm of a user; and
perform control to update the user interface in accordance with the determined degree of rotation of the portion of the arm of the user to highlight one of the plurality of items for selection.

2. The information processing apparatus according to claim 1, wherein the processing circuitry is further configured to receive the input signal from a user input device held by the user.

3. The information processing apparatus according to claim 1 wherein the processing circuitry is further configured to detect the input signal from a user input device configured to capture an image of the arm of the user.

4. The information processing apparatus according to any preceding claim, wherein the processing circuitry is further configured to perform control to display the ring of the plurality of items around the arm of the user in a virtual environment.

5. The information processing apparatus according to claim 4, wherein the processing circuitry is further configured to perform control of one or more selected from the list consisting of:
i. a radial offset of the ring from the arm of the user;
ii. an axial offset of the ring from the arm of the user;
iii. a number of items forming the plurality of items of the ring; and
iv. when the user interface is overlaid on a background image, a contrast between an item of the plurality of items of the ring and a portion of the background image on which the item of the plurality of items is overlaid,
to display the ring of the plurality of items.

6. The information processing apparatus according to any preceding claim, wherein the processing circuitry is further configured to perform control to rotate the ring of the plurality of items at a rate other than the rate of rotation of the arm of the user.

7. The information processing apparatus according to claim 6, wherein the processing circuitry is configured to perform control to select the rate to rotate the ring of the plurality of items in accordance with an orientation of the arm of the user.

8. The information processing apparatus according to any preceding claim, wherein the processing circuitry is further configured to generate a resultant input signal by applying a low pass filter to the input signal received from the user device; and analyze the resultant signal to determine a degree of rotation of a portion of an arm of a user.

9. The information processing apparatus according to any preceding claim, wherein the processing circuitry is further configured to perform control to select a configuration of items in the ring in accordance with the orientation of the arm of the user.

10. The information processing apparatus according to claim 9, wherein the configuration of items in the ring includes one or more selected from the list consisting of:
i) a radius of the ring; and
ii) a set of items forming the plurality of items.

11. The information processing apparatus according to any preceding claim, wherein the ring of the plurality of items is circular or wherein the ring of the plurality of items is a spiral.

12. The information processing apparatus according to claim 11, wherein for a spiral ring the processing circuitry is further configured to display only a portion of the spiral on the user interface and to update the portion of the spiral displayed on the user interface in accordance with a highlighted item.

13. An information processing method, comprising:
performing control to display a user interface in response to detection of a first trigger condition, the user interface comprising a plurality of items, arranged in a ring, that can be highlighted for selection by a user;
receiving an input signal from a user input device;
analyzing the input signal to determine a degree of rotation of a portion of an arm of a user; and
performing control to update the user interface in accordance with the determined degree of rotation of the portion of the arm of the user to highlight one of the plurality of items for selection.

14. A computer program comprising instructions which, when implemented by a computer, cause the computer to perform a method of:
performing control to display a user interface in response to detection of a first trigger condition, the user interface comprising a plurality of items, arranged in a ring, that can be highlighted for selection by a user;
receiving an input signal from a user input device;
analyzing the input signal to determine a degree of rotation of a portion of an arm of a user; and
performing control to update the user interface in accordance with the determined degree of rotation of the portion of the arm of the user to highlight one of the plurality of items for selection.

15. An information processing system comprising:
a user input device; and
an information processing apparatus, the information processing apparatus comprising processing circuitry configured to:
perform control to display a user interface in response to detection of a first trigger condition, the user interface comprising a plurality of items, arranged in a ring, that can be highlighted for selection by a user;
receive an input signal from the user input device;
analyze the input signal to determine a degree of rotation of a portion of an arm of a user; and
perform control to update the user interface in accordance with the determined degree of rotation of the portion of the arm of the user to highlight one of the plurality of items for selection.
